# EUROPÄISCHE PATENTSCHRIFT

(11) **EP 2 022 316 B1**
(45) Veröffentlichungstag und Bekanntmachung des Hinweises auf die Patenterteilung: **05.07.2017**
(21) Anmeldenummer: 08012973.7
(22) Anmeldetag: 18.07.2008
(51) Int. Cl.: A01D 78/10

(54) **Heuwerbungsmaschine**
Haymaking machine
Machine de fenaison

(30) Priorität: 26.07.2007 DE 102007035407
(43) Veröffentlichungstag der Anmeldung: 11.02.2009
(73) Patentinhaber: CLAAS Saulgau GmbH, 88348 Bad Saulgau (DE)
(72) Erfinder: Frick, Clemens, 88356 Ostrach (DE)

(56) Entgegenhaltungen:
- EP-A- 0 465 393
- EP-A- 1 433 372
- EP-A- 1 525 786

## Beschreibung

Die Erfindung betrifft eine Heuwerbungsmaschine, insbesondere einen Kreiselschwader, gemäß dem Oberbegriff des unabhängigen Anspruchs.

Rechkreisel von Kreiselschwadern mit gesteuerten Zinkenarmen verfügen über mit Rechzinken bestückte Zinkenarme, die in bekannter Weise von Kurvenbahnen gesteuert werden und die von einem Fahrwerk, bestehend aus Tast- und Stützrädern, bodenkopierend am Boden abgestützt werden. Bekannt sind sogenannte Einkreiselschwader, aber auch Mehrkreiselschwader, wobei letztere wiederum bekannt sind als Seiten- oder Mittelschwader. Bei Seiten- und Mittelschwadern sind die Rechkreisel an klappbaren Auslegern geführt in Klappgelenken mit einem Fahrgestell verbunden. Dabei werden die Rechkreisel zur Überführung in ihre Transportstellung durch verklappen der Ausleger in ihre Transportstellung hochgeklappt.

### Stand der Technik

EP 0 465 393 A1 offenbart eine Landwirtschaftliche Maschine, insbesondere einen Schwader für auf dem Boden befindliches Pflanzengut, der ein Traggestell, mindestens einen Teleskoparm, der mindestens aus zwei Teilen besteht, von welchen der erste an dem Traggestell angelenkt und der zweite in Bezug auf den ersten verschiebbar ist, wobei der Teleskoparm aus einer Arbeitsstellung in eine Transportstellung hochgeschwenkt und umgekehrt aus der Transportstellung in die Arbeitsstellung heruntergeschwenkt werden kann, mindestens ein Arbeitsorgan, wie einen Rotor zum Schwaden, wobei dieses Arbeitsorgan an dem verschiebbaren Teil des Teleskoparms angelenkt ist, und zumindest eine Vorrichtung zur Einstellung der Länge des Teleskoparmes aufweist, wobei jeder Teleskoparm ein Gestänge aufweist, das so gestaltet ist, dass es automatisch seine Verlängerung, wenn er in Arbeitsstellung versetzt wird, und seine Verkürzung, wenn er in Transportstellung versetzt wird, auslöst, wobei sich jedes Gestänge zwischen dem Traggestell und dem verschiebbaren Teil des entsprechenden Teleskoparms erstreckt, und wobei die Position des Gestänges auf dem Traggestell veränderbar ist.

Damit die Rechkreisel dem Horizont des Bodens, insbesondere in kuppiertem Gelände mit Kuppen und Senken, besser folgen können, werden diese kardanisch mit dem Maschinengestell 3 des Kreiselschwaders so verbunden, dass diese Roll- und Nickbewegungen unabhängig vom Maschinengestell ausführen können. Dabei sind die Rechkreisel auf eigenen Fahrwerken, ausgestattet mit Tast- und Stützrädern, am Boden abgestützt, so dass diese bodenkopierend dem Geländeverlauf folgen können.

Bedingt durch die Fahrbewegung und die Bodenkontur wirken Vertikalbeschleunigungen und Winkelbeschleunigungen auf die Rechkreisel ein, so dass diesen langwellige aber auch kurzwellige Schwingungen aufgezwungen werden, so dass den Vertikalbewegungen auch Roll- und Nickbewegungen überlagern. Damit die Rechkreisel diese Bewegungen quasi unabhängig vom Fahrgestell des Kreiselschwaders ausführen können, sind sie an Auslegerarmen, die in Klappgelenken um etwa in Fahrtrichtung weisende Gelenkachsen schwenkbar sind, an dem Fahrgestell angelenkt. Dabei sind die Rechkreisel am freien Ende der Auslegerarme dann kardanisch aufgehängt.

In der Arbeitsstellung des Kreiselschwaders sind die Auslegerarme ausgeklappt und in der Transportstellung hochgeklappt, so dass auch die Rechkreisel mit hochgeklappt werden. Die jeweiligen Landesgesetze hinsichtlich des öffentlichen Straßenverkehrs grenzen die Transportbreite und die Transporthöhe einer gezogenen Landmaschine dieser Gattung ein, so dass die hochgeklappten Rechkreisel eine Transporthöhe von etwa 4 Metern nicht überschreiten dürfen.

Um diese Höhe nicht zu überschreiten sind Lösungen bekannt, bei denen entweder Kreiselarme für die Transportfahrt abgenommen werden können und in entsprechend ausgebildeten Halterungen am Maschinengestell befestigt werden oder auch, dass die Kreiselarme Scharniergelenke aufweisen, um deren Achsen die Kreiselarme abgewinkelt werden können und in dieser Stellung dann fixiert werden können.

Es sind weiterhin Lösungen bekannt, bei denen das gesamte Fahrwerk durch einen entsprechend ausgebildeten kraftbetriebenen Mechanismus für die Transportfahrt abgesenkt, bzw. für die Arbeitsstellung wieder angehoben werden kann. Dadurch wird die Gesamthöhe des Kreiselschwaders um den Betrag der Absenkung reduziert.

Es sind weiterhin Lösungen bekannt, bei denen die Auslegerarme zwischen der Klappachse und dem Rechkreisel ein weiteres Klappgelenk aufweisen, wobei die in Fahrtrichtung weisende Klappachse und die Klappachse des weiteren Klappgelenks etwa rechtwinkelig zueinander verlaufen, so dass die Rechkreisel um die weitere Klappachse des weiteren Klappgelenks um etwa 90° verklappt werden können, wodurch sich die Transporthöhe ebenfalls reduzieren lässt. Dieser erweiterte Klappmechanismus ist so ausgestaltet, dass die Gelenkachse des weiteren Klappgelenks in der Arbeitstellung vertikal und damit senkrecht zum Boden verläuft. Dadurch kann dieser Klappmechanismus auch dazu verwand werden, die Arbeitsbreite eines derartigen Kreiselschwaders zu verändern.

Es sind weiterhin Lösungen bekannt, bei denen die Rechkreisel an teleskopierbaren Auslegerarmen angelenkt sind und bei denen die Verschiebungen durch den Längenveränderungsmechanismus genutzt werden, um einerseits die Transporthöhe zu reduzieren und um andererseits auch die Arbeitsbreite verändern zu können. Auch sind Mischformen bekannt, die die verschiedenen zuvor genannten Ausführungsarten miteinander kombinieren. Nachteil dieser Ausführungsformen ist entweder der manuelle Umbauaufwand, der kraft- und zeitraubend ist, oder die relativ aufwendige Bauweise, die mit erheblichen Kosten verbunden ist.

### Aufgabenstellung

Hier setzt die Erfindung an, mit dem Ziel, eine Fahrstabilität verbessernde und bedienerfreundlichere auf Bedienungskomfort ausgerichtete Lösung aufzuzeigen, die es zudem ermöglichen soll, mit möglichst großen Rechkreiseldurchmessern eine große Arbeitsbreitenvariation zu ermöglichen, wobei die Arbeitsbreite zusätzlich stufenlos verändert werden kann.

### Lösung der Aufgabe

Gelöst wird die Aufgabe der Erfindung mit den kennzeichnenden Merkmalen des unabhängigen Anspruchs 1. Weitere vorteilhafte Ausgestaltungen der Erfindung sind den abhängigen Ansprüchen, der Beschreibung und den Figurendarstellungen zu entnehmen.

Erreicht wird dieses dadurch, dass sich der Auslegerarm aus zwei Grundelementen zusammensetzt, aus einem ersten Grundelement, ausgebildet als Koppelgetriebe und einem zweiten Grundelement, ausgeführt als Prismenführung, wobei beide Grundelemente für sich allein oder zusammenwirkend einen Längenveränderungsmechanismus für den Auslegerarm darstellen. Dabei sind die Grundelemente so ausgelegt, dass sie allein schon durch Anheben oder Absenken eines Auslegerarms eine Längenveränderung des Auslegerarms durch eine translatorische Verschiebung eines Rechkreisels etwa quer zur Fahrtrichtung bewirken. Beide Grundelemente zusammen bilden somit einen Längenänderungsmechanismus für den gesamten Auslegerarm. Bevorzugt ausgebildet ist die translatorische Beweglichkeit des Rechkreisels nach dem Laufkatzenprinzip, welches bedeutet, dass der Rechkreisel von einer Laufkatze aufgenommen wird, die sich in einer Prismenführung längs des Auslegerarms verschieben lässt. Erfindungsgemäß kann die Arbeitsbreite dabei durch die Prismenführung innerhalb eines großen Verstellbereichs, welche alternativ auch durch eine Teleskopik ersetzt werden kann, stufenlos verändert werden.

Ein Koppelgetriebe als Lenkergetriebe stellt dabei das Antriebselement zum Ausheben der Schwadkreisel in die Vorgewendestellung und zum Verschwenken in die Vorgewende- oder Transportposition dar. Es besteht im Wesentlichen aus zwei Lenkerkoppeln, einer Zug- und einer Druckstrebe in Verbindung mit einem hydraulischen Antrieb, die sich in einer vertikalen Ebene bewegen.

Die Prismenführung mit Ihrer Laufkatze nimmt den Rechkreisel auf. Die Prismenführung als erster Teil des Auslegerarms schließt sich an dem Koppelgetriebe als zweiter Teil des Auslegerarms an. Koppelgetriebe und Prismenführung bilden somit gemeinsam einen zweiteiligen verschwenkbaren und faltbaren Ausleger. Der Rechkreisel ist dabei dem freien Ende des Auslegers zugewandt. Der Teil des Auslegers, der das Koppelgetriebe bildet, stellt den zweiten Teil des Auslegers dar und dieser ist als gebundenes Ende des Auslegers dem Maschinengestell in einem Schwenklager an diesem gebunden zugewandt.

Damit ist das Koppelgetriebe zugleich das Verbindungselement zwischen der Prismenführung und dem Schwenklager des Auslegers, an dem der Ausleger an dem Maschinengestell bzw. Fahrwerk gebunden ist. Dabei verlaufen alle Gelenkachsen der Koppelgelenke etwa in Fahrtrichtung, so dass sich die Lenkerkoppeln in einer vertikalen Ebene, etwa quer zur Fahrtrichtung verlaufend, bewegen können.

Die Ausgestaltung des Koppelgetriebes ist dabei so, dass diese einen Faltmechanismus mit einer Faltbewegung für den Auslegerarm beinhaltet. Dabei bilden die Lenkerkoppeln in der Arbeitsstellung eine nach unten geöffnete Schmiege. Durch die Betätigung des Hydraulikzylinders zum aus- bzw. anheben des Rechkreisels verändert sich der Öffnungswinkel der Schmiege, so dass der Rechkreisel aus seiner Arbeitsteilung in eine angehobene Vorgewendestellung bzw. in die Transportstellung überführt wird. Dabei erfährt der Rechkreisel allein schon durch das Anheben vom Boden durch diese Faltbewegung gleichzeitig auch eine horizontale Verrückung in Richtung Maschinen- bzw. Fahrgestell, welches seinen Schwerpunkstabstand zum Maschinengestell mindert.

Dieses stellt einen besonderen Vorteil der Erfindung dar, da durch die erfinderische Ausgestaltung des Auslegerarms gerade in der Vorgewendestellung zugleich automatisch die Länge des Auslegerarms und damit der Abstand des ausgehobenen Rechkreisels zum Fahrgestell gemindert wird, so dass sich das Kippmoment des Kreiselschwaders insbesondere bei einseitigem Anheben der Schwadkreisel dadurch erheblich reduziert, welches einen Beitrag zur Fahrstabilität und damit zum sicheren Beherrschen des Gespanns Traktor Heuwerbungsmaschine darstellt.

Beide Maßnahmen, die translatorische Verrückung des Rechkreisels durch das Koppelgetriebe des Auslegerarms einerseits und die der Verrückung durch die Prismenführung andererseits, schaffen somit eine große Bandbreite der Veränderung der Arbeitsbreite der Heuwerbungsmaschine.

Ebenso liefern beide Maßnahmen, die translatorische Verschiebung durch die Prismenführung und die Faltung durch das Koppelgetriebe, einen Beitrag zur Fahrstabilität während der Straßentransportfahrt, indem der Schwadkreisel und die Masse des Auslegerarms auf ein Minimum gegenüber dem Boden abgesenkt werden, wodurch der Schwerpunktsabstand des Kreiselschwaders in seiner Transportstellung gegenüber dem Boden als Aufstandsebene auf ein Minimum reduziert wird.

Ein besonderes Augenmerk ist dabei auch auf die Ausgestaltung des Antriebsstrangs des Rechkreisels längs des Auslegers gerichtet, der ja ebenfalls den Anforderungen der Bandbreite der Verrückung genügen muss.

Dazu besteht der Antriebsstrang des Rechkreisels des Auslegers aus wenigstens zwei in Reihe geschalteten Gelenkwellen, wobei diese untereinander durch ein Winkelgetriebe miteinender verbunden sind. Damit nimmt der Antriebsstrang in der Arbeitsstellung eine abgewinkelte Stellung in einer überwiegend horizontalen Ebene ein. Dabei wird der Antriebsstrang des Rechkreisels von einer Lenkerkoppel, welche sich am Prismenteil des Auslegers abstützt, getragen und geführt. Damit der Antriebsstrang zur Überführung in seine Transportstellung entsprechend gekürzt wird, wird er einer Faltbewegung während des Hochklappens ausgesetzt, so dass die Faltbewegung des Antriebsstrangs während des Klappvorgangs in die Transportstellung und umgekehrt in die Arbeitsstellung von der Lenkerkoppel gesteuert wird.

Diese Faltbewegung des Antriebsstrangs wird entweder durch die Verschiebung des Rechkreisels innerhalb der Prismenführung ausgelöst oder durch die Veränderung des Schmiegenwinkels des Koppelgetriebes des Auslegerarms oder eben durch beide dieser Bewegungen gleichzeitig. Es handelt sich demnach um zwei Koppelgetriebe, die miteinander gekoppelt sind und deren Bewegungsabläufe teils unabhängig teils abhängig voneinander ausgelöst werden können. Somit stehen beide Koppelgetriebe, das des Auslegers und das des Antriebsstrangs mit angekoppelten Prismenteil miteinander in Wirkverbindung, was den Faltvorgang des Antriebsstrangs anbetrifft.

Prinzipiell ist die Anwendung der Erfindung auf Heuwerbungsmaschinen, wie Seitenschwader mit wenigstens zwei Schwadkreiseln, aber auch auf Mittelschwader mit zwei und mehr Schwadkreiseln anwendbar.

### Ausführungsbeispiel

Nähere Einzelheiten der Erfindung sind den nachfolgenden Figurendarstellungen und deren Beschreibungen zu entnehmen. Es zeigen:

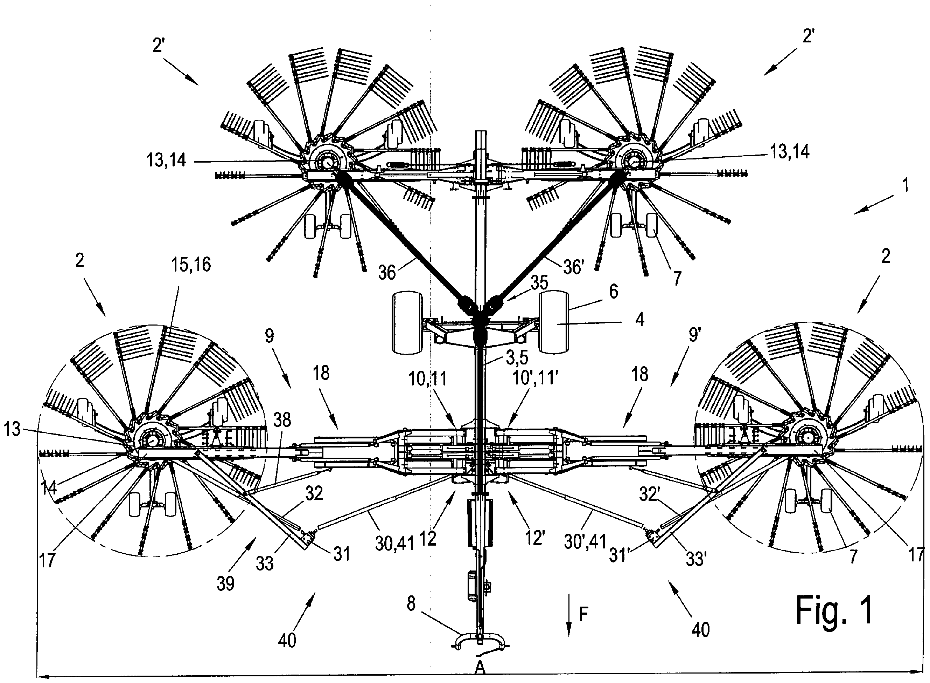

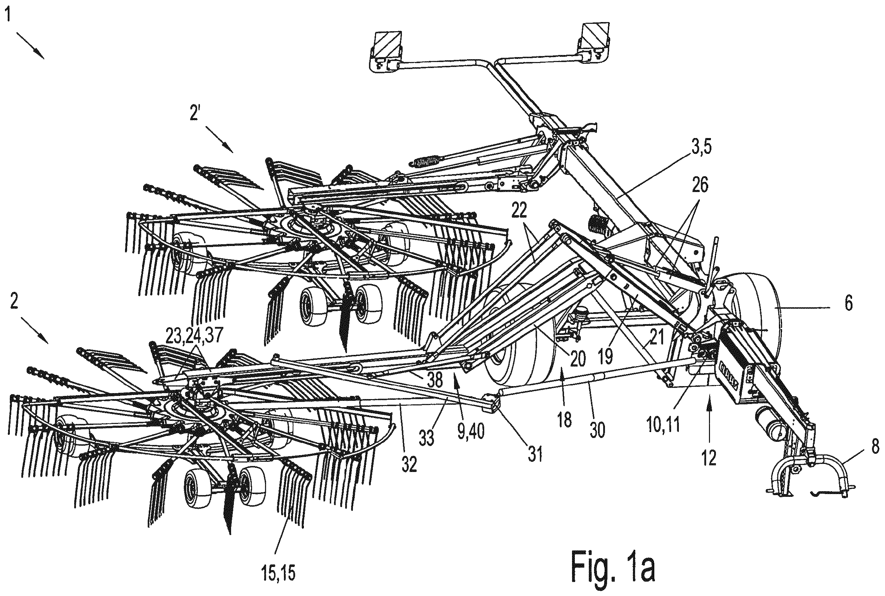

Fig.1 einen Vierkreiselschwader nach der Erfindung in einer Draufsicht in Arbeitsstellung
Fig. 1 a die linke Hälfte des Vierkreiselschwaders gemäß Fig. 1 in einer perspektivischen Darstellung in Arbeitsstellung
Fig.2 einen Vierkreiselschwader nach der Erfindung mit hochgeklappten Rechkreiseln in Transportstellung
Fig.3 die linke Hälfte des Vierkreiselschwaders gemäß Fig. 1 in einer perspektivischen Darstellung in einer Vorgewendestellung
Fig. 4 den freigelegten Antriebsstrang des Vierkreiselschwaders gemäß Fig.1 nach der Erfindung in einer Draufsicht in Arbeitsstellung

Fig.1 zeigt einen Vierkreiselschwader 1 als Mittelschwader nach der Erfindung in einer Draufsicht in Arbeitsstellung. Dieser besteht im Wesentlichen aus den Rechkreiseln 2,2', dem Maschinengestell 3 mit dem Fahrgestell 4, wobei sich das Maschinengestell über den Längsholm 5 und das Fahrgestell 6 am Boden abstützt. Die Rechkreisel 2,2' stützen sich in der Arbeitsstellung auf ihre Tast- und Stützräder 7 bodenkopierend am Boden ab. Der Kreiselschwader weist eine Kupplungsvorrichtung 8 auf, mit der an einem Zugfahrzeug angeschlossen werden kann. Angetrieben werden die umlaufenden Schwadkreisel von der Zapfwelle des Zugfahrzeugs, vorzugsweise von einem Traktor über einen Antriebsstrang, bestehend aus mehreren Gelenkwellen und Verteilergetrieben, auf die weiter unten noch näher eingegangen wird.

Die Lage der vorderen Schwadkreisel 2 bestimmt die momentane Arbeitsbreite A, die erfindungsgemäß in einer großen Bandbreite verstellbar sein soll. Dazu sind die Schwadkreisel 2 an erfindungsgemäßen Auslegerarmen 9,9' in einer Anlenkung 12,12' an dem Längsholm 5 des Maschinengelenks in Klappgelenken 10,10' mit etwa in Fahrtrichtung F weisenden Gelenkachsen 11,11' um diese verschwenkbar mit diesem verbunden. Die Schwadkreisel 2,2' sind in bekannter weise an den freien Enden der Ausleger kardanisch an diesem aufgehängt, welches eine optimale Bodenanpassung der Schwadkreisel 2,2' ermöglicht. Die Rechkreisel 2,2' mit ihren Zinkenarmen 15 und den Rechzinken 16 werden umlaufend um die Kreiselachse 14 des Kreiselgehäuses 13 angetrieben.

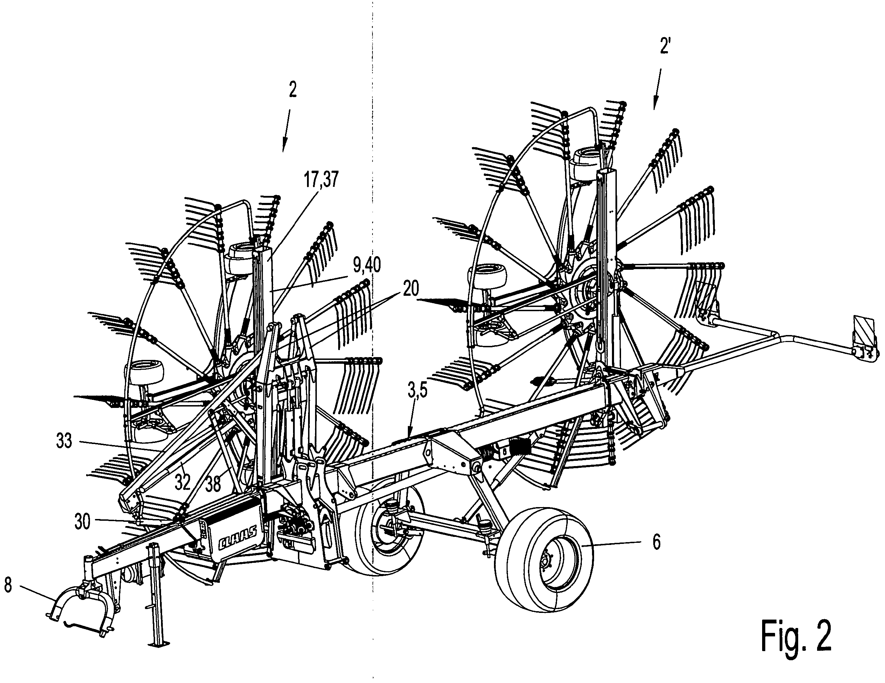

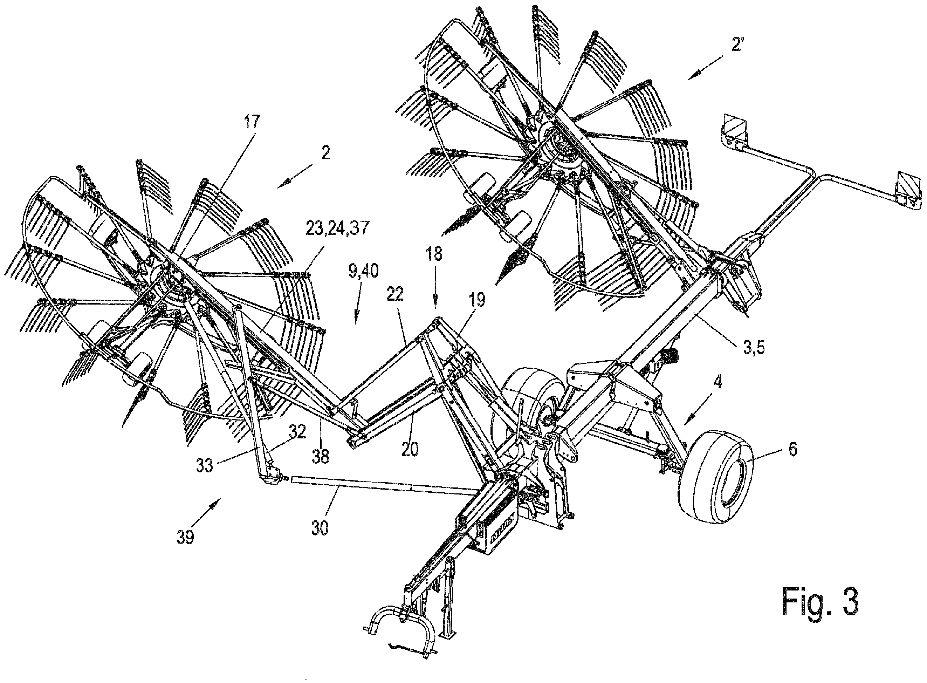

Fig. 1 a zeigt die linke Hälfte des Vierkreiselschwaders gemäß Fig. 1 in einer perspektivischen Darstellung in Arbeitsstellung. Der besseren Übersichtlichkeit halber sind die Rechkreisel der rechten Seite nicht mit dargestellt. Analog zur Fig. 1a zeigt Fig. 2 den Vierkreiselschwader nach der Erfindung mit hochgeklappten Rechkreiseln in Transportstellung und ebenfalls analog Fig. 1 a zeigt Fig. 3 die linke Hälfte des Vierkreiselschwaders gemäß Fig. 1 in einer perspektivischen Darstellung in einer Vorgewendestellung.

Ein Auslegerarm 9,9' besteht im Wesentlichen aus einer Prismenführung 17 und einem Koppelgetriebe 18, die gemeinsam einen Längenveränderungsmechanismus 40 bilden. Das Koppelgetriebe 18 besteht aus zwei Lenkerkoppeln 19,20, der inneren 19 und der äußeren Lenkerkoppel 20 und einer Koppel ausgebildet als Druckstrebe 21 und einer weiteren Koppel ausgebildet als Zugestrebe 22. Die Prismenführung 17 bildet den äußeren freien Teil und das Koppelgetriebe 18 den gebundenen inneren Teil des Auslegers 9.

Die Prismenführung 37 besteht beispielsweise aus einem Außenprisma 23, welches ein Innenprisma 24 ausgebildet als Laufkatze aufnimmt. Am freien Ende des Innenprisma 24 ist der Schwadkreisel 2 angelenkt. Im Inneren der Prismenführung verbirgt sich ein nicht sichtbarer Hydraulikzylinder, welcher dazu genutzt wird, einerseits die Arbeitsbreite A zu verstellen und der andererseits dazu genutzt wird, die Transporthöhe der hochgeklappten Rechkreisel zu reduzieren. Das Koppelgetriebe wird ebenfalls von einem Hydraulikzylinder 26 betätigt, welcher sich am Maschinengestell 3 abstützt.

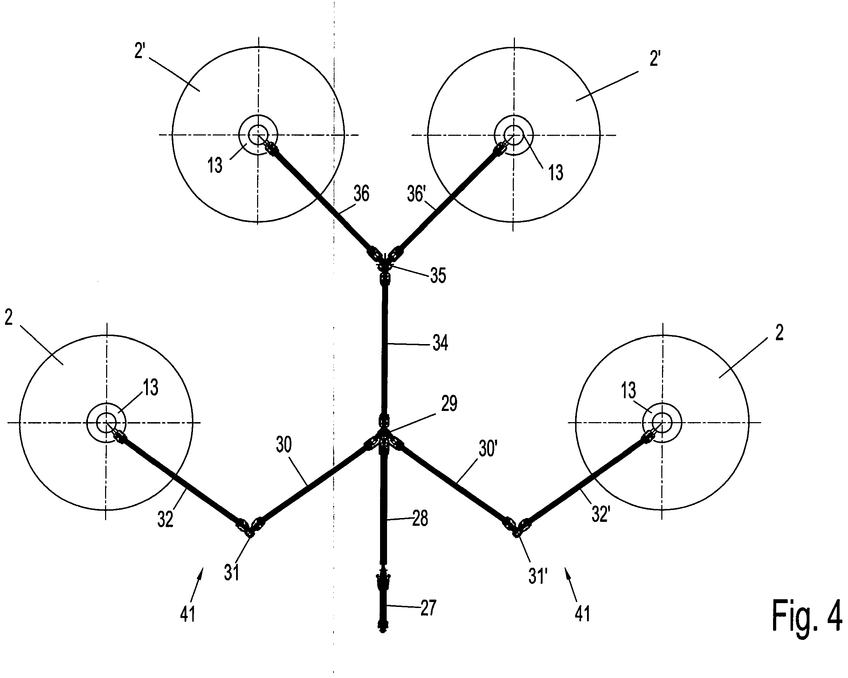

Fig. 4 verdeutlicht den freigelegten Antriebsstrang des Vierkreiselschwaders gemäß Fig.1. Ausgehend von der Gelenkwelle 27, welche die Zapfwelle des Zugfahrzeugs mit dem Antriebsstrang 41 verbindet, setzt sich der Antriebsstrang 41 fort und setzt sich zusammen aus einer Gelenkwelle 28, einem Abzweiggetriebe 29, von dem die Gelenkwellen 30,30',34 abgehen, wobei sich der Gelenkwellenstrang zu den hinteren Rechkreiseln 2' fortsetzt über die Gelenkwelle 34, dem Verteiler- bzw. Winkelgetriebe 35 und den Gelenkwellen 36,36', welche die hinteren Rechkreisel 2' antreiben.

Die vorderen Rechkreisel 2 werden von den jeweiligen Gelenkwellen 30,30',32,32' als Antriebsstrang angetrieben, wobei die Gelenkwellen 30,32 bzw. 30',32' jeweils untereinander durch ein Winkelgetriebe 31,31' verbunden sind und dadurch gekoppelt und verbunden in Antriebsverbindung miteinander stehen. Dabei wird das Winkelgetriebe 31,31' von einer Lenkerkoppel 33,33', welche sich an der Prismenführung 17 abstützt, geführt und abgestützt. Die Lenkerkoppel 33 und die Koppelstange 38, welche zum einen gelenkig an der äußeren Lenkerkoppel 20 und zum anderen gelenkig an der Lenkerkoppel 33 angeschlagen sind, bilden ein weiteres Koppelgetriebe 39, welches die Gelenkwellen 30,33 bzw. 30',33' beim Anheben der Schwadkreisel zueinander in eine definierte Lage zusammenfaltet und in die Transportstellung überführt, wie dieses in der Fig. 2 zu ersehen ist.

Diese Ausgestaltung des Auslegers ermöglich bei einem Vierkreiselschwader wie bildlich dargestellt beispielsweise eine Arbeitsbreite von maximal etwa 15m und minimal von etwa 12 m.

### Bezugszeichenliste

- 1: Kreiselschwader
- 2,2': Rechkreisel
- 3: Maschinengestell
- 4: Fahrgestell
- 5: Längsholm
- 6: Laufräder
- 7: Tast- und Stützräder
- 8: Kupplungseinrichtung
- 9,9': Auslegerarm
- 10,10': Klappgelenk
- 11,11': Gelenkachse
- 12,12': Anlenkung
- 13: Kreiselgehäuse
- 14: Kreiselachse
- 15: Zinkenarm
- 16: Rechzinken
- 17: Prismenführung
- 18: Koppelgetriebe
- 19: innere Lenkerkoppel
- 20: äußere Lenkerkoppel
- 21: Druckstrebe
- 22: Zugstrebe
- 23: Außenprisma
- 24: Innenprisma
- 26: Hydraulikzylinder
- 27: Gelenkwelle
- 28: Gelenkwelle
- 29: Abzweiggetriebe
- 30,30': Gelenkwelle
- 31: Winkelgetriebe
- 32,32': Gelenkwelle
- 33,33': Lenkerkoppel
- 34: Gelenkwelle
- 35: Winkelgetriebe
- 36,36': Gelenkwelle
- 37: Laufkatzenführung
- 38: Koppelstange
- 39: Koppelgetriebe
- 40: Längenveränderungsmechanismus
- 41: Antriebsstrang

## Patentansprüche

1. Heuwerbungsmaschine, mit mehreren um aufrechte Kreiselachsen umlaufend angetriebenen Rechkreiseln (2, 2'), welche Zinkenarme (15) mit Rechzinken (16) aufweisen und wobei wenigstens ein Rechkreisel (2, 2') an einem Maschinengestell (3) mittels eines Auslegerarms (9, 9') verklappbar um eine etwa horizontal verlaufende Achse eines Klappgelenks an diesem angelenkt ist, und der wenigstens eine Rechkreisel (2, 2') am Boden durch Tast- und Stützräder (7) abstützbar ist und durch Verklappung des Auslegerarms (9, 9') um eine oder mehrere etwa in Fahrtrichtung verlaufende Schwenkachsen von einer Arbeitsposition in eine angehobene Transportposition und umgekehrt überführbar ist, **dadurch gekennzeichnet, dass** sich der Auslegerarm (9,9') aus zwei Grundelementen zusammensetzt, aus einem ersten Grundelement ausgebildet als Koppelgetriebe (18), welches einen Faltmechanismus mit einer Faltbewegung für den Auslegerarm (9, 9') beinhaltet, wobei Lenkerkoppeln (19, 20) in der Arbeitsstellung eine nach unten geöffnete Schmiege bilden, deren Öffnungswinkel durch die Betätigung eines Hydraulikzylinders (26) zum Aus- bzw. Anheben des Rechkreisels (2, 2') veränderbar ist, und einem zweiten Grundelement, ausgeführt als Prismenführung (17) oder Teleskopik, welche den Rechkreisel (2) translatorisch verschiebbar aufnimmt.

2. Heuwerbungsmaschine nach Anspruch 1, **dadurch gekennzeichnet, dass** die Prismenführung (17) dem freien Ende des Auslegerarms (9, 9') zugewandt ist.

3. Heuwerbungsmaschine nach Anspruch 1, **dadurch gekennzeichnet, dass** der Rechkreisel (2,2') von einer Laufkatze aufgenommen wird.

4. Heuwerbungsmaschine nach Anspruch 1, **dadurch gekennzeichnet, dass** das Koppelgetriebe (18) dem gebundenen Ende des Auslegerarms (9, 9') zugewandt ist.

5. Heuwerbungsmaschine nach Anspruch 1, **dadurch gekennzeichnet, dass** das Koppelgetriebe (18) aus einer inneren Lenkerkoppel (19), einer äußeren Lenkerkoppel (20), einer Druckstrebe (21) einer Zugstrebe (22) und wenigstens einem Hydraulikzylinder (26) besteht.

6. Heuwerbungsmaschine nach Anspruch 1, **dadurch gekennzeichnet, dass** das Koppelgetriebe (18) das Verbindungselement zwischen der Prismenführung (17) und dem Klappgelenk (10,10') des Auslegerarms (9,9') ist.

7. Heuwerbungsmaschine nach Anspruch 1, **dadurch gekennzeichnet, dass** die Gelenkachsen der Gelenke des Koppelgetriebes (18) etwa in Fahrtrichtung (F) verlaufen.

8. Heuwerbungsmaschine nach Anspruch 1, **dadurch gekennzeichnet, dass** der Antriebsstrang (40) des Rechkreisels (2) des Auslegerarms (9,9') wenigstens zwei in Reihe geschaltete Gelenkwellen (30,32;30',32') aufweist, die untereinander durch ein Winkelgetriebe (31,31') gekoppelt und miteinender verbunden sind.

9. Heuwerbungsmaschine nach Anspruch 8, **dadurch gekennzeichnet, dass** die wenigstens zwei Gelenkwellen (30,32;30',32') während des Hochklappens durch eine Faltbewegung dem Klapp- und Schwenkvorgang angepasst werden.

10. Heuwerbungsmaschine nach Anspruch 9, **dadurch gekennzeichnet, dass** die Faltbewegung von einem weiteren Koppelgetriebe (39) geführt und gesteuert ist.

11. Heuwerbungsmaschine nach Anspruch 10, **dadurch gekennzeichnet, dass** das weitere Koppelgetriebe (39) eine Lenkerkoppel (33;33') und eine Koppelstange (38) umfasst.

12. Heuwerbungsmaschine nach Anspruch 10, **dadurch gekennzeichnet, dass** das weitere Koppelgetriebe (39) durch die translatorische Bewegung eines Rechkreisels (2) und zum anderen durch die Faltbewegung des anderen Koppelgetriebes (18) betätigt und gesteuert wird.

13. Heuwerbungsmaschine nach Anspruch 10 bis 12, **dadurch gekennzeichnet, dass** beide Koppelgetriebe (18 und 39) miteinander gekoppelt in Wirkverbindung stehen.

14. Heuwerbungsmaschine nach Anspruch 1 bis 13, **dadurch gekennzeichnet, dass** die Heuwerbungsmaschine (1) ein Mittelschwader mit wenigsten zwei Schwadkreiseln (2) ist.

15. Heuwerbungsmaschine nach Anspruch 1 bis 13, **dadurch gekennzeichnet, dass** die Heuwerbungsmaschine (1) ein Mittelschwader ausgebildet als Vierkreiselschwader ist.

16. Heuwerbungsmaschine nach Anspruch 15, **dadurch gekennzeichnet, dass** die Arbeitsbreite (A) in den Abmessungen von etwa 12m bis etwa 15m stufenlos veränderbar ist.

## Claims

1. A haymaking machine comprising a plurality of raking rotors (2, 2') which are driven in rotation about perpendicular rotor axes and which have tine arms (15) having raking tines (16), and wherein at least one raking rotor (2, 2') is mounted to a machine frame (3) pivotably by means of an extension arm (9, 9') about an approximately horizontally extending axis of a pivot joint on same and the at least one raking rotor (2, 2') can be supported on the ground by sensing and support wheels (7) and can be transferred from a working position into a raised transport position and vice-versa by pivotal movement of the extension arm (9, 9') about one or more pivot axes extending in the direction of travel, **characterised in that** the extension arm (9, 9') is composed of two main elements, a first main element in the form of a coupling transmission (18) which includes a folding mechanism with a folding movement for the extension arm (9, 9'), wherein coupling links (19, 20) in the working position form a downwardly opened folding bevel, the angle of opening of which is variable by the actuation of a hydraulic cylinder (26) for lifting out and up the raking rotor (2, 2'), and a second main element in the form of a prismatic guide means (17) or telescopic means which carries the raking rotor (2) for translatory displacement.

2. A haymaking machine according to claim 1 **characterised in that** the prism guide means (17) is towards the free end of the extension arm (9, 9').

3. A haymaking machine according to claim 1 **characterised in that** the raking rotor (2, 2') is carried by a travel trolley.

4. A haymaking machine according to claim 1 **characterised in that** the coupling transmission (18) is towards the connected end of the extension arm (9, 9').

5. A haymaking machine according to claim 1 **characterised in that** the coupling transmission (18) comprises an inner coupling link (19), an outer coupling link (20), a compression strut (21), a tension strut (22) and at least one hydraulic cylinder (26).

6. A haymaking machine according to claim 1 **characterised in that** the coupling transmission (18) is the connecting element between the prism guide means (17) and the pivot joint (10, 10') of the extension arm (9, 9').

7. A haymaking machine according to claim 1 **characterised in that** the joint axes of the joints of the coupling transmission (18) extend approximately in the direction of travel (F).

8. A haymaking machine according to claim 1 **characterised in that** the drive train (40) of the raking rotor (2) of the extension arm (9, 9') has at least two series-connected cardan shafts (30, 32; 30', 32') which are coupled together by an angle transmission (31, 31') and are connected together.

9. A haymaking machine according to claim 8 **characterised in that** the at least two cardan shafts (30, 32; 30', 32') are adapted to the folding and pivotal operation during upward folding by a folding movement.

10. A haymaking machine according to claim 9 **characterised in that** the folding movement is guided and controlled by a further coupling transmission (39).

11. A haymaking machine according to claim 10 **characterised in that** the further coupling transmission (39) has a coupling link (33; 33') and a coupling bar (38).

12. A haymaking machine according to claim 10 **characterised in that** the further coupling transmission (39) is actuated and controlled by the translatory movement of a raking rotor (2) and on the other hand by the folding movement of the other coupling transmission (18).

13. A haymaking machine according to claims 10 to 12 **characterised in that** both coupling transmissions (18 and 39) are connected together in operatively coupled relationship.

14. A haymaking machine according to claims 1 to 13 **characterised in that** the haymaking machine (1) is a central windrower having at least two windrower rotors (2).

15. A haymaking machine according to claims 1 to 13 **characterised in that** the haymaking machine (1) is a central windrower in the form of a four-rotor windrower.

16. A haymaking machine according to claim 15 **characterised in that** the working width (A) is steplessly variable in the dimensions of from about 12 m to about 15 m.

## Revendications

1. Machine de fenaison comprenant plusieurs rotors de râtelage (2, 2') qui sont entraînés en rotation autour d'axes de rotors verticaux et qui comportent des bras porte-dents (15) garnis de dents de râtelage (16), et au moins un rotor de râtelage (2, 2') étant articulé sur un bâti de machine (3) au moyen d'un bras (9, 9') de façon rabattable sur le bâti de machine autour d'un axe sensiblement horizontal d'une articulation de rabattage, et le au moins un rotor de râtelage (2, 2') pouvant prendre appui au sol par l'intermédiaire de roues de palpage et d'appui (7) et pouvant être transféré d'une position de travail vers une position de transport relevée et inversement par rabattage du bras (9, 9') autour d'un ou plusieurs axes de pivotement s'étendant sensiblement dans le sens de la marche, **caractérisée en ce que** le bras (9, 9') se compose de deux éléments de base, d'un premier élément de base conformé en train d'accouplement (18) qui renferme un mécanisme de pliage avec un mouvement de pliage pour le bras (9, 9'), des leviers oscillants (19, 20) formant dans la position de travail une équerre ouverte vers le bas dont l'angle d'ouverture est modifiable par l'actionnement du vérin hydraulique (26) pour lever, respectivement abaisser le rotor de râtelage (2, 2'), et d'un second élément de base conformé en moyen de guidage prismatique (17) ou en moyen télescopique qui reçoit le rotor de râtelage (2) avec une possibilité de déplacement en translation.

2. Machine de fenaison selon la revendication 1, **caractérisée en ce que** le moyen de guidage prismatique (17) est tourné vers l'extrémité libre du bras (9, 9').

3. Machine de fenaison selon la revendication 1, **caractérisée en ce que** le rotor de râtelage (2, 2') est reçu par un chariot.

4. Machine de fenaison selon la revendication 1, **caractérisée en ce que** le train d'accouplement (18) est tourné vers l'extrémité reliée du bras (9, 9').

5. Machine de fenaison selon la revendication 1, **caractérisée en ce que** le train d'accouplement (18) est constitué d'un levier oscillant intérieur (19), d'un levier oscillant extérieur (20), d'une barre de poussée (21), d'une barre de traction (22) et d'au moins un vérin hydraulique (26).

6. Machine de fenaison selon la revendication 1, **caractérisée en ce que** le train d'accouplement (18) est l'élément de liaison entre le moyen de guidage prismatique (17) et l'articulation de rabattage (10 , 10') du bras (9, 9').

7. Machine de fenaison selon la revendication 1, **caractérisée en ce que** les axes d'articulation des articulations du train d'accouplement (18) s'étendent sensiblement dans le sens de la marche (F).

8. Machine de fenaison selon la revendication 1, **caractérisée en ce que** la chaîne de transmission (40) du rotor de râtelage (2) du bras (9, 9') comporte au moins deux arbres articulés montés en série (30, 32 ; 30', 32') qui sont accouplés entre eux par l'intermédiaire d'un engrenage angulaire (31, 31') et reliés l'un à l'autre.

9. Machine de fenaison selon la revendication 8, **caractérisée en ce que**, pendant le rabattage vers le haut par un mouvement de pliage, les au moins deux arbres articulés (30, 32 ; 30', 32') sont adaptés à l'opération de rabattage et de pivotement.

10. Machine de fenaison selon la revendication 9, **caractérisée en ce que** le mouvement de pliage est guidé et commandé par un autre train d'accouplement (39).

11. Machine de fenaison selon la revendication 10, **caractérisée en ce que** l'autre train d'accouplement (39) comprend un levier oscillant (33 ; 33') et une tige d'accouplement (38).

12. Machine de fenaison selon la revendication 10, **caractérisée en ce que** l'autre train d'accouplement (39) est actionné et commandé par le mouvement de translation d'un rotor de râtelage (2) et, d'autre part, par le mouvement de pliage de l'autre train d'accouplement (18).

13. Machine de fenaison selon la revendication 10 à 12, **caractérisée en ce que** les deux trains d'accouplement (18 et 39) sont en liaison active en étant couplés l'un à l'autre.

14. Machine de fenaison selon la revendication 1 à 13, **caractérisée en ce que** la machine de fenaison (1) est un andaineur à dépose centrale avec au moins deux rotors d'andainage (2).

15. Machine de fenaison selon la revendication 1 à 13, **caractérisée en ce que** la machine de fenaison (1) est un andaineur à dépose centrale conformé en andaineur à quatre rotors.

16. Machine de fenaison selon la revendication 15, **caractérisée en ce que** la largeur de travail (A) est modifiable en continu dans des dimensions d'environ 12 m à 15 m.
